# EUROPÄISCHE PATENTANMELDUNG

(11) **EP 2 947 621 A1**
(43) Veröffentlichungstag der Anmeldung: **25.11.2015**
(21) Anmeldenummer: 14169501.5
(22) Anmeldetag: 22.05.2014
(51) Int. Cl.: G06Q 50/04

(54) **Montage- und Qualitätssicherungssystem für Arbeitsplätze**

(71) Anmelder: Elabo GmbH, 74564 Crailsheim (DE)
(72) Erfinder: Die Erfindernennung liegt noch nicht vor
(74) Vertreter: Stolmár & Partner Patentanwälte PartG mbB

(57) **Zusammenfassung**

Montage- und Qualitätssicherungssystem für einen festen und/oder mobilen Arbeitsplatz, umfassend ein Anweisungssystem 5, das die auszuführenden Arbeitsschritte für den Arbeiter vorgibt, ein Rückmeldesystem 7, mit dem eine Rückmeldung durch den Arbeiter über die ausgeführten Arbeitsschritte an das Montagesystem meldbar ist und ein Steuersystem 3, welches das Anweisungssystem 5 steuert und die Rückmeldung des Rückmeldesystems 7 verarbeitet, wobei das Anweisungssystem 5 und/oder das Rückmeldesystem 7 mobil am Arbeiter vorgesehen sind.

## Beschreibung

### Gebiet der Erfindung

Die Erfindung betrifft ein System zur Montage- und Qualitätssicherung für Arbeitssysteme und ein Verfahren, das mit einem erfindungsgemäßen System durchgeführt wird.

### Stand der Technik

In nicht automatisierten Montagewerkstätten, die für die Herstellung von Produkten wie beispielsweise Maschinen, Elektrogeräten oder ähnlichem in niedriger Stückzahl sowie für die Reparatur verwendet werden, sowie im Qualitätsmanagement ist es notwendig, dass die Arbeitsschritte von einem Arbeiter durchgeführt werden. Diese Arbeiter müssen wissen, in welcher Reihenfolge die Arbeitsschritte durchgeführt werden. Beispielsweise muss bei der Montage der Arbeiter die genaue Zahl der Bauelemente (Schrauben, verschiedene Gehäuse, Platinen, usw.) kennen, damit das fertige Bauteil fehlerfrei montiert werden kann.

Um die Abläufe zu vereinfachen und auch ungelernten Arbeitskräften eine sichere Durchführung der Arbeitsschritte zu ermöglichen, gibt es verschiedene Systeme. Beispielsweise können die Arbeitsschritte in einem Papierdokument (Ordner, Heft) festgeschrieben sein, so dass der Arbeiter immer nachsehen kann. Dies verzögert jedoch insbesondere bei ungelernten Arbeitskräften die jeweilige Tätigkeit. In einer Weiterentwicklung wird ein so genanntes "pick-light-System" bereitgestellt, bei dem am Arbeitsplatz an bestimmten Positionen, beispielsweise an den Materialbehältern, Anzeigen oder Lampen angebracht sind, mit denen die Anzahl und Art der zu verwendenden Komponenten angezeigt wird. So kann beispielsweise durch eine Digitalanzeige an dem entsprechenden Schraubenbehälter die Anzahl der zu entnehmenden Schrauben angezeigt werden. Oder eine einfache Lampe leuchtet an der Stelle auf, an der das nächste Bauteil entnommen werden soll. Dazu gibt es ein einfaches Rückmeldesystem 7, beispielsweise ein Knopf an dem Behälter oder auch ein zentraler Schalter, der dem Vorgabesystem signalisiert, dass der vorgegebene Arbeitsschritt erledigt ist. Danach kann dann beispielsweise die Anzeige um 1 verringert werden oder auf einen anderen Behälter umspringen, oder das Licht an einem anderen oder dem gleichen Behälter aufleuchten, um das nächste Element für die Montage bereitzustellen.

Für die Qualitätssicherung ist dieses "pick-light-System" allerdings vergleichsweise ungeeignet, da die zu kontrollierenden Bauteile nicht mit Lampen versehen werden können und eine Anzeige an einer bestimmten Stelle des Arbeitsplatzes montiert ist. Somit muss der Arbeiter/Qualitätsprüfer immer wieder von seinem Untersuchungsobjekt zu einer Stelle gehen, von der er die Anzeige sehen kann. Insbesondere bei großen Maschinen, bei denen z.B. an verschiedenen leitenden Bauteilen darauf geprüft werden muss, ob diese Bauteile unter Strom stehen und eine Isolierung somit nicht funktionsfähig ist, kann die Anzeige durchaus aus dem Blickfeld des Arbeiters geraten. Aber auch bei der Montage wird der Arbeiter dadurch immer wieder von seiner Arbeit abgelenkt.

Aufgabe ist es daher, ein System bereitzustellen, welches nicht nur die Arbeit für ungelernte Arbeiter in der Montage und in der Qualitätssicherung erleichtert, sondern auch den Aufwand für die Überprüfung des nächsten Arbeitsschrittes minimiert.

### Darstellung der Erfindung

Gelöst wird diese Aufgabe von einem Montage- und Qualitätssicherungssystem für einen Arbeitsplatz nach Anspruch 1 und ein entsprechendes Verfahren nach Anspruch 9.

Ein erfindungsgemäßes Montage- und Qualitätssicherungssystem für einen Arbeitsplatz umfasst ein Anweisungssystem, das die auszuführenden Arbeitsschritte für den Arbeiter vorgibt, ein Rückmeldesystem, mit dem eine Rückmeldung durch den Arbeiter über die ausgeführten Arbeitsschritte an das Montagesystem meldbar ist und ein Steuersystem, welches das Anweisungssystem steuert und die Rückmeldung des Rückmeldesystems verarbeitet, wobei das Anweisungssystem und/oder das Rückmeldesystem mobil am Arbeiter vorgesehen sind. Dadurch, dass das Anweisungssystem und/oder das Rückmeldesystem am Arbeiter vorgesehen sind, kann der Arbeiter frei an seinem Arbeitsplatz herumlaufen und gleichzeitig die Anweisungen des Anweisungssystem erfassen oder Rückmeldungen mit dem Rückmeldesystem durchgeben, ohne dass die Gefahr besteht, dass seine Sicht auf eines der Systeme oder der Zugriff auf eines der Systeme eingeschränkt wäre. Dies gilt natürlich insbesondere dann, wenn alle verwendeten Systeme (Anweisungs-, Rückmelde und möglicherweise auch das Steuer- und Überwachungssystem) am Arbeiter angeordnet sind.

Vorzugsweise ist das Rückmeldesystem sprachgesteuert. Dadurch ist gewährleistet, dass der Arbeiter zu jeder Zeit die Hände frei hat, um die volle Kontrolle über die Montage oder die Qualitätssicherung zu behalten.

Ferner sind das Anweisungssystem und/oder das Rückmeldesystem kabellos ausgebildet. Dadurch wird die Bewegungsfreiheit erhöht und die mögliche Behinderung durch eine Kabelverbindung mit dem Steuersystem vermieden. Diese Ausgestaltung ist insbesondere dann vorteilhaft, wenn das Steuersystem beispielsweise an einem zentralen Ort der Arbeitsstätte angeordnet ist. Aber auch wenn das Steuersystem am Arbeiter angeordnet wird, indem ein kleiner Rechner z.B. in einer Gürteltasche oder in einer Tasche der Arbeitskleidung getragen wird, können Verbindungskabel die Bewegungsfreiheit einschränken.

Ferner kann das Montage- und Qualitätssicherungssystem ein Überwachungssystem zum Dokumentieren der ausgeführten Arbeitsschritte umfassen. Dadurch wird die Transparenz der ausgeführten Arbeitsschritte erhöht und etwaige Fehler können klar nachvollzogen werden. Dies kann insbesondere über eine Kameravorrichtung geschehen, die zum Aufzeichnen von Einzelbildern oder von Filmen oder Filmabschnitten vorgesehen ist. Das Montage- und Qualitätssicherungssystem kann dabei eine Bildverarbeitungssoftware aufweisen, die insbesondere bei Montagearbeiten die einzelnen Bauelemente erkennen und so die Rückmeldung an das System automatisiert durchführen kann.

Das Anweisungssystem, mit dem die Arbeitsschritte vorgegeben werden, umfasst vorzugsweise einen Kopfhörer, eine am Körper des Arbeiters angeordnete Anzeige (bspw. als Armband ausgebildet) und/oder eine Datenbrille. Das Rückmeldesystem umfasst vorzugsweise ein Mikrofon. Insbesondere sind das Anweisungssystem und das Rückmeldesystem sowie ein eventuelles Überwachungssystem in Form einer Kopfbedeckung ausgebildet, beispielsweise als Helm oder als Haube. Kopfhörer und Datenbrille sind in jedem Fall immer im Blickfeld bzw. an den Ohren des Arbeiters, der so völlig unabhängig von seinem Standort und seiner eigentlichen Blickrichtung jederzeit die Arbeitsanweisungen empfangen kann.

Ferner kann insbesondere über das Rückmeldesystem an das Steuersystem ein Initialimpuls gesendet werden, der dem Steuersystem eine vorbestimmte Abfolge an Arbeitsschritten signalisiert. Dies kann beispielsweise in Form eines Barcodes geschehen, der mit der Kamera abgefilmt und erkannt wird, kann aber auch sprachgesteuert über bestimmte Befehle erfolgen oder über ein Touchpad der Anzeige eingegeben werden. Dadurch können verschiedenste Montagearbeiten hintereinander selbst von ungelernten Arbeitskräften durchgeführt werden, da die Vorgabe der spezifischen Arbeitsschritte entsprechend der kommenden Aufgabe (bspw. der zu montierenden Baugruppe) vom Arbeiter initiiert werden kann.

Die einzelnen Systeme können miteinander funktionstechnisch verschmolzen werden. D.h. das Rückmeldesystem kann eine Kamera umfassen, die dann auch als Überwachungssystem fungieren kann, oder das Anweisungssystem und das Rückmeldesystem funktionieren beide über dieselbe Anzeige, die dafür bspw. als Touch-Screen ausgebildet sein kann.

Das Verfahren zur Montage- und Qualitätssicherung weist demnach die Schritte Anweisen eines Arbeiters zu einem Arbeitsschritt über ein Anweisungssystem durch ein Steuersystem, Durchführen des Arbeitsschritts durch den Arbeiter und Rückmelden der Durchführung des Arbeitsschritt an das Steuersystem auf. Die anderen Verfahrensschritte ergeben sich zwangsweise durch das verwendete System und haben im Allgemeinen auch die gleichen Vorteile. Beispielsweise ist bei der Verwendung eines Überwachungssystem 9s auch ein Schritt des Dokumentierens der durchgeführten Arbeitsschritte vorgesehen.

### Kurze Beschreibung der Figuren

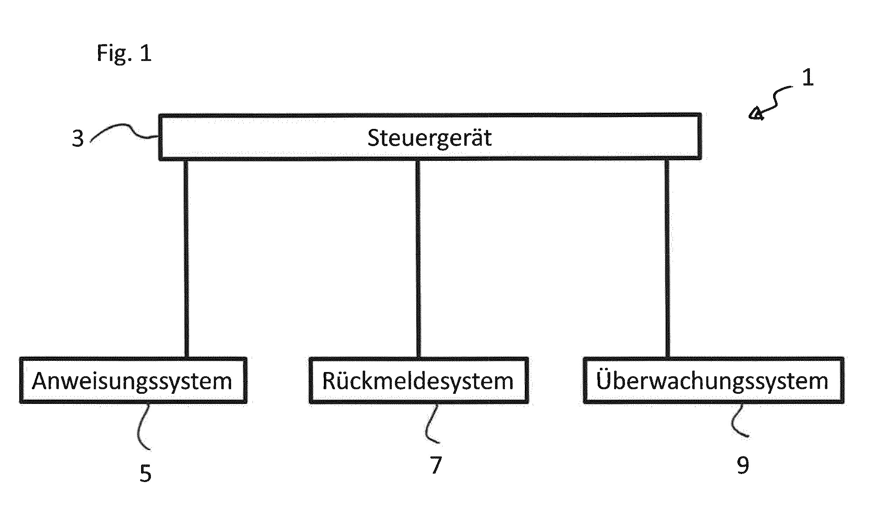

Figur 1 zeigt schematisch eine Ausführungsform der vorliegenden Erfindung.

### Darstellung bevorzugter Ausführungsformen der Erfindung

Die Erfindung betrifft ein Montage- und Qualitätssicherungssystem 1 und umfasst grundsätzlich ein Anweisungssystem 5, ein Rückmeldesystem 7, ein Steuersystem 3 und vorzugsweise auch ein Überwachungssystem 9. Die Systeme sind alle am Arbeiter vorgesehen. Einzelne Funktionalitäten der vorgenannten Systeme können durch das gleiche strukturelle Element ausgeführt werden. So kann eine Kamera bspw. als Überwachungssystem 9 verwendet werden, die gleiche Kamera aber auch als Initiator einer Arbeitsanweisung für das Steuergerät dienen. Die verschiedenen Systeme können auch konstant untereinander kommunizieren und entsprechende Daten miteinander abgleichen oder aneinander versenden.

Das Anweisungssystem 5 ist beispielsweise als eine Anzeige ausgebildet. Eine solche Anzeige kann an jeder Stelle des Körpers oder der Arbeitskleidung befestigt sein, insbesondere aber als eine Anzeige, die als Armband ausgebildet ist, so dass der Blick im Wesentlichen weiter auf die zu montierenden oder zu prüfenden Bauelemente und Maschinen gerichtet sein kann. Insbesondere ist jedoch bevorzugt, dass die Anzeige als Datenbrille ausgebildet ist, so dass in der Datenbrille die Anweisungsschritte angezeigt werden. Bei dieser Lösung wird der Arbeiter nur minimal von seiner Arbeit abgelenkt. Ferner ist es auch möglich, die Anweisungsschritte über Kopfhörer zu empfangen, wobei der Vorteil einer visuellen Anzeige der ist, dass die Hörfähigkeit nicht durch Kopfhörer oder ähnliches eingeschränkt wird. Dagegen vermeidet der Kopfhörer visuelle Ablenkungen oder dass der Blick überhaupt von der Arbeit weggerichtet werden muss.

Das Rückmeldesystem 7 kann beispielsweise über eine berührungsempfindliche Anzeige ("Touch-Screen") ausgebildet sein, die auch als Anweisungssystem 5 verwendbar ist. Dazu wird dann über eine entsprechende Berührung an der Anzeige der jeweilige Arbeitsschritt, den man durchgeführt hat, an das Steuersystem 3 gemeldet.

Das Rückmeldesystem 7 kann aber auch als Mikrofon ausgebildet sein, das ebenfalls an der Anzeige vorgesehen werden kann, das aber auch separat an anderen Stellen des Körpers, insbesondere als Mikrofon im Mundbereich, ausgeführt werden kann. Über ein Mikrofon können dann einfache Befehle oder Schlagworte an das Steuersystem 3 gemeldet werden und damit Arbeitsschritte bestätigt, Anweisungsketten initiiert oder andere Steuermöglichkeiten durchgeführt werden. Beispielsweise können die verschiedenen Systeme über die Sprachsteuerung auch an- und ausgeschaltet werden.

Das Steuersystem 3 selbst weist eine Software auf, die an die Notwendigkeiten des Montage- und Qualitätssicherungssystem 1 angepasst ist. Wenn eine Sprachsteuerung vorhanden ist, dann muss die Software selbstverständlich auch Sprachbefehle verstehen können und beispielsweise auch selbst Anweisungsschritte per Audiobefehl ausführen können.

Ferner kann auch ein Überwachungssystem 9 vorgesehen sein. Das Überwachungssystem 9 ist vorzugsweise als Kamera ausgebildet, die beispielsweise in der Datenbrille vorgesehen ist, aber auch getrennt an der Arbeitskleidung befestigt werden kann. In einer bevorzugten Ausführungsform sind sowohl das Anweisungssystem 5, das Rückmeldesystem 7 und/oder das Überwachungssystem 9 als Kopfbedeckung ausgebildet, d.h., beispielsweise eine Datenbrille mit einer Kamera und einem Mikrofon, so dass ein audiovisuelles System bereitgestellt wird, das über die Datenbrille Anweisungen geben kann, über das Mikrofon sprachgesteuerte Rückmeldungen bekommt und gleichzeitig über die Kamera Einzelbilder oder Filmaufnahmen als Dokumentation der ausgeführten Arbeitsschritte umfasst. Mit der Kamera können auch Barcodes oder Pixelcodes eingelesen werden und so eine Anweisungsroutine am Steuersystem 3 initiiert werden. Ebenso kann insbesondere über das Rückmeldesystem 7 oder das Überwachungssystem 9 das Steuersystem 3 angewiesen werden, andere in der Montage oder Qualitätssicherung verwendete Geräte, bspw. Versorgungsgeräte, anzusteuern und so Prüfparameter zu verändern. So kann man über einen Touch-Screen, sprachgesteuert über ein Mikrophon oder auf andere Weise dem Steuergerät mitteilen, das zum Beispiel die Prüfspannung verändert werden soll. Eine solche Veränderung wird dann vom Steuergerät veranlasst und vorzugsweise auch über das Anweisungssystem 5 bestätigt.

Die einzelnen Systeme, d.h., das Anweisungssystem 5, das Überwachungssystem 9, das Rückmeldesystem 7 und auch das Steuersystem 3 sind vorzugsweise kabellos ausgebildet, z.B. über Funk miteinander in Kontakt. Da das Steuersystem 3 aber mittlerweile als Kleinstcomputer ausgebildet sein kann, ist es auch möglich, die verschiedenen Systeme miteinander zu verkabeln und das gesamte Montage- und Qualitätssicherungssystem 1 am Körper zu tragen. Es können auch einzelne Systeme kabellos funktionieren, beispielsweise die Anzeige, das Rückmeldesystem 7 und/oder das Überwachungssystem 9, und andere mit Kabeln mit dem Steuersystem 3 verbunden sein. Ein zentrales Steuersystem 3 für alle Arbeitsplätze vereinfacht natürlich Veränderungen, da diese Veränderungen lediglich im Zentralsystem hinterlegt werden und nicht auf jedes einzelne mobile Steuergerät aufgespielt werden müssen. Andererseits können die einzelnen Steuergeräte selbst auch kabellos mit einem Zentralsystem in Verbindung stehen oder jedenfalls von Zeit zu Zeit mit oder ohne direkte Verkabelung aktualisiert werden.

Grundsätzlich werden die Anweisungsschritte immer vom Arbeiter ausgelöst, sei es dass er den Start des Montage- Reparatur- und/oder Qualitätssicherungssystems anfordert (z.B. per Knopfdruck, Sprachbefehl) oder sei es, dass das System automatisch erkennt, dass der Arbeiter bereit zur Arbeit ist. In der Anwendung funktioniert die Erfindung dann so, dass der Arbeiter vorzugsweise die gewünschten Anweisungen aus einer Vielzahl von verschiedenen Möglichkeiten initiiert, beispielsweise indem er das entsprechende Befehlswort über die Sprachsteuerung eingibt oder indem er über eine Taste oder ein Touchpad die entsprechenden Anweisungen startet oder indem er einen Barcode oder einen Pixelcode am Arbeitsplatz einscannt, beispielsweise mit einem entsprechenden Scanner oder einer Kamera (die dann auch als Überwachungssystem 9 fungieren kann). Der so erzeugte Initialimpuls wählt dann aus einer Vielzahl von Arbeitsabfolgen die vorbestimmte Arbeitsabfolge aus, die durch den Barcode, Pixelcode, Tasten- oder Touchpaddruck bestimmt wurde, wodurch die Anweisungen für die Arbeitsschritte angezeigt werden. Danach erscheinen auf dem Anweisungssystem 5, beispielsweise der Anzeige, der Datenbrille oder über Kopfhörer, die Anweisungen, die dann ausgeführt werden. Über das Rückmeldesystem 7 wird dann beispielsweise über Sprachsteuerung, über das Touchpad oder automatisiert über eine Kamera mit Bilderkennung eine Rückmeldung an das System gegeben, dass der entsprechende Arbeitsschritt ausgeführt wurde. Danach folgen die weiteren Anweisungen und Rückmeldungen, bis das Ende der Anweisungsschleife erreicht ist. Vorzugsweise werden alle einzelnen Arbeitsschritte dokumentiert, insbesondere mit der Kamera, die sprachgesteuert oder automatisiert Bilder aufnehmen kann. Eine Dokumentation kann allerdings auch über eine Sprachbestätigung der ausgeführten Arbeitsschritte geschehen.

Eine weitere Möglichkeit besteht über eine Bild- oder Funkerkennung bestimmter Merkmale des Arbeiters oder der Arbeitskleidung. Beispielsweise kann ein Arbeitsring oder ein Handschuh an der Hand getragen werden, der es dann ermöglicht die Bewegung dieser Hand zu nachzuverfolgen. So kann die Hand mit Ring oder der Handschuh erkannt werden, wenn bestimmte Tätigkeiten durchgeführt werden. Dies gilt insbesondere dann, wenn der Hintergrund, also das Bild vor/auf dem die Tätigkeit durchgeführt ist, bekannt sind. Das kann der Fall sein, wenn ein Hintergrund im Steuergerät oder dem Überwachungssystem hinterlegt ist. Beispielsweise kann so mittels einer Kamera überwacht werden, wenn die Hand mit Ring/Handschuh in einen bestimmten Behälter greift und etwas entnimmt oder wenn an einer bestimmten Stelle einer Maschine/eines Produkts zwei Spannungsprüfer angelegt werden. Selbst wenn die Entnahme oder das Prüfen selbst nicht erkannt werden kann, erhöht sich dennoch die Sicherheit das der Arbeitsschritt tatsächlich durchgeführt wurde.

Ferner kann auch jeder Arbeitsschritt durch das Einscannen von Barcodes/Pixelcodes oder das Einlesen von zuordnungsfähigen Kennzeichen (Produktnummer) bestätigt werden. So kann beim Entnehmen einer zu verbauenden Schraube deren Kennung eingescannt/eingelesen werden und damit im System der entsprechende Arbeitsschritt dokumentiert werden.

Ähnlich kann auch ein Prüfverfahren durch das Montage- und Qualitätssicherungssystem 1 gesteuert werden, indem dann die einzelnen Prüfschritte vorgegeben werden und diese analog zum Montagesystem abgearbeitet werden. Insbesondere beim Prüfverfahren (aber prinzipiell auch beim Montageverfahren) können Prozess- und/oder Prüfparameter geändert werden. Dies kann über das Rückmeldesystem 7 geschehen.

Grundsätzlich lässt sich die Erfindung in vielen Anwendungsbereichen einsetzen wenn Arbeitsschritte nacheinander ablaufen und ein computergesteuertes System daher nach festen Regeln die Arbeitsabläufe anweisen kann.

## Patentansprüche

1. Montage- und Qualitätssicherungssystem (1) für einen festen und/oder mobilen Arbeitsplatz, umfassend
ein Anweisungssystem (5), das die auszuführenden Arbeitsschritte für den Arbeiter vorgibt;
ein Rückmeldesystem (7), mit dem eine Rückmeldung durch den Arbeiter über die ausgeführten Arbeitsschritte an das Montagesystem durchführbar ist;
ein Steuersystem (3), welches das Anweisungssystem (5) steuert und die Rückmeldung des Rückmeldesystems (7) verarbeitet;
**dadurch gekennzeichnet, dass**
das Anweisungssystem (5) und/oder das Rückmeldesystem (7) mobil am Arbeiter vorgesehen sind.

2. Montage- und Qualitätssicherungssystem (1) nach Anspruch 1, bei dem das Rückmeldesystem (7) sprachgesteuert ist.

3. Montage- und Qualitätssicherungssystem (1) nach Anspruch 1 oder 2, bei dem das Anweisungssystem (5) und/oder das Rückmeldesystem (7) kabellos ausgebildet sind.

4. Montage- und Qualitätssicherungssystem (1) nach einem der vorhergehenden Ansprüche, ferner umfassend ein Überwachungssystem (9) zum Dokumentieren der ausgeführten Arbeitsschritte.

5. Montage- und Qualitätssicherungssystem (1) nach einem der vorhergehenden Ansprüche, bei dem das Überwachungssystem (9) eine Kameravorrichtung umfasst, die zum Aufzeichnen von Einzelbildern und/oder Filmen vorgesehen ist.

6. Montage- und Qualitätssicherungssystem nach einem der vorhergehenden Ansprüche, bei dem das Anweisungssystem (5) einen Kopfhörer und/oder eine Datenbrille umfasst.

7. Montage- und Qualitätssicherungssystem (1) nach einem der vorhergehenden Ansprüche, bei dem das Montage- und Qualitätssicherungssystem als Kopfbedeckungsvorrichtung ausgebildet ist.

8. Montage- und Qualitätssicherungssystem (1) nach einem der vorhergehenden Ansprüche, bei dem ein Mittel vorhanden ist, mit dem an das Steuersystem (3) ein Initialimpuls gesendet werden kann, der dem Steuersystem (3) eine vorbestimmte Abfolge an Arbeitsschritten signalisiert.

9. Verfahren zur Montage- und Qualitätssicherung mit einem System (1) nach einem der vorhergehenden Ansprüche, umfassend die Schritte
- Anweisen eines Arbeiters zu einem Arbeitsschritt über ein Anweisungssystem (5) durch ein Steuersystem (3);
- Durchführen des Arbeitsschritts durch den Arbeiter;
- Rückmelden der Durchführung des Arbeitsschritts an das Steuersystem (3).

10. Verfahren nach Anspruch 9, ferner umfassend einen Überwachungsschritt zum Dokumentieren des ausgeführten Arbeitsschritts.

11. Verfahren nach Anspruch 9 oder 10, ferner umfassend einen Schritt zum Starten einer vorbestimmten Abfolge von Arbeitsschritten, wobei das Starten durch einen vorbestimmten Initialimpuls ausgeführt wird.
